# EUROPEAN PATENT APPLICATION

(11) **EP 4 757 225 A1**
(43) Date of publication of application: **10.06.2026**
(21) Application number: 23947124.6
(22) Date of filing: 02.08.2023
(51) Int. Cl.: H04L 5/00

(54) **INFORMATION TRANSMISSION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN)
(74) Representative: Novagraaf Technologies
(86) International application number: PCT/CN2023/110835
(87) International publication number: WO 2025/025176

(57) **Abstract**

Provided is a method for transmitting information, relating to the technical field of communications. The method is performed by a terminal device. The method includes: transmitting (S410) first reporting information to a network device, wherein the first reporting information includes CSI feedback information, and the first reporting information is used for the network device to determine whether the CSI feedback information is used for monitoring a first CSI feedback model.

## Description

### TECHNICAL FIELD

The present disclosure relates to the technical field of communications, and more particularly relates to a method for transmitting information, and a terminal device, a network device, a chip, a computer-readable storage medium, a computer program product, a computer program, and a communication system thereof.

### RELATED ART

**In** order to reduce the feedback overhead of channel state information (CSI) and retain channel information to a greater extent, it is proposed in the related art to compress and feedback the CSI based on an artificial intelligence (AI)-based model. The performance of the model needs to be monitored to ensure its good performance over time. Therefore, it is necessary to collect original CSI data to monitor the model. However, since the dimension of the original CSI data is large, how to control the air interface resource overhead needs to be considered.

### SUMMARY

Embodiments of the present disclosure provide a method for transmitting information, and a terminal device, a network device, a chip, a computer-readable storage medium, a computer program product, a computer program, and a communication system thereof, capable of reducing the air interface resource overhead caused by monitoring of the CSI feedback model.

The embodiments of the present disclosure provide a method for transmitting information. The method is performed by a terminal device, and the method includes: transmitting first reporting information to a network device, wherein the first reporting information includes CSI feedback information, and the first reporting information is used for the network device to determine whether the CSI feedback information is used for monitoring a first CSI feedback model.

The embodiments of the present disclosure provide a method for transmitting information. The method is performed by a network device, and the method includes: receiving first reporting information from a terminal device, wherein the first reporting information includes CSI feedback information; and determining, based on the first reporting information, whether to use the CSI feedback information for monitoring a first CSI feedback model.

The embodiments of the present disclosure provide a terminal device. The terminal device includes: a first communication module, configured to transmit first reporting information to a network device, wherein the first reporting information includes CSI feedback information, and the first reporting information is used for the network device to determine whether the CSI feedback information is used for monitoring a first CSI feedback model.

The embodiments of the present disclosure provide a network device. The terminal device includes: a second communication module, configured to receive first reporting information from a terminal device, wherein the first reporting information includes CSI feedback information; and a second processing module, configured to determine, based on the first reporting information, whether to use the CSI feedback information for monitoring a first CSI feedback model.

The embodiments of the present disclosure provide a terminal device. The terminal device includes: a transceiver, a processor, and a memory. The memory is configured to store one or more computer programs, the transceiver is configured to communicate with another device, and the processor is configured to load and run the one or more computer programs stored in the memory to cause the terminal device to perform the method for transmitting information as described above.

The embodiments of the present disclosure provide a network device. The terminal network includes: a transceiver, a processor, and a memory. The memory is configured to store one or more computer programs, the transceiver is configured to communicate with another device, and the processor is configured to load and run the one or more computer programs stored in the memory to cause the network device to perform the method for transmitting information as described above.

The embodiments of the present disclosure provide a chip configured to perform the methods for transmitting information as described above.

Specifically, the chip includes a processor, wherein the processor is configured to load one or more computer programs from a memory and run the one or more computer programs to cause a device installed with the chip to perform the methods for transmitting information as described above.

The embodiments of the present disclosure provide a computer-readable storage medium, storing one or more computer programs, wherein the one or more computer programs, when run by a device, cause the device to perform the methods for transmitting information as described above.

The embodiments of the present disclosure provide a computer program product, including: one or more computer instructions, wherein the one or more computer instructions cause a computer to perform the methods for transmitting information as described above.

The embodiments of the present disclosure provide a computer program, wherein the computer program, when running on a computer, causes the computer to perform he the methods for transmitting information as described above.

The embodiments of the present disclosure provide a communication system, including the terminal device and the network device that are configured to perform the methods for transmitting information as described above.

In the embodiments of the present disclosure, the terminal device transmits the first reporting information carrying the CSI feedback information to the network device, and the network device determines, based on the first reporting information, whether the CSI feedback information is used for monitoring the first CSI feedback model. By adding this function of the first reporting information, regular reporting of the CSI feedback information and reporting of the model monitoring data can be differentiated, such that the regular reporting process of the CSI feedback information can be reused for the reporting of the model monitoring data, without the need to add an independent process of transmitting the model monitoring data. Thus, the resource overhead for reporting the model monitoring data can be reduced.

### BRIEF DESCRIPTION OF DRAWINGS

FIG. 1 is a schematic diagram of a communication system according to some embodiments of the present disclosure;
FIG. 2 is a schematic diagram of a neural network according to some embodiments of the present disclosure;
FIG. 3 is a schematic diagram of an AI-based CSI feedback system according to some embodiments of the present disclosure;
FIG. 4 is a schematic flowchart of a method for transmitting information according to some embodiments of the present disclosure;
FIG. 5 is a schematic flowchart of another method for transmitting information according to some embodiments of the present disclosure;
FIG. 6 is a schematic diagram of a visual result of a plurality of CSI data in a real system;
FIG. 7 is a schematic diagram of a comparison of CSI feedback precision when CSI feedback information has different numbers of bits;
FIG. 8 is a schematic structural diagram of first reporting information according to some embodiments of the present disclosure;
FIG. 9 is a schematic diagram of a method for transmitting information in a first application example of the present disclosure;
FIG. 10 is a schematic diagram of a method for transmitting information in a second application example of the present disclosure;
FIG. 11 is a schematic diagram of a method for transmitting information in a third application example of the present disclosure;
FIG. 12 is a schematic block diagram of a terminal device according to some embodiments of the present disclosure;
FIG. 13 is a schematic block diagram of a terminal device according to some other embodiments of the present disclosure;
FIG. 14 is a schematic block diagram of a network device according to some embodiments of the present disclosure;
FIG. 15 is a schematic block diagram of a communication device according to some embodiments of the present disclosure;
FIG. 16 is a schematic block diagram of a chip according to some embodiments of the present disclosure; and
FIG. 17 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure.

The technical solutions according to the embodiments of the present disclosure are applicable to various communication systems, such as a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) communication system, a 6^{th} generation (6G) communication system, or other communication systems.

In general, the traditional communication systems support a limited number of connections and is relatively easy to implement. However, with the development of the communication technologies, the mobile communication systems not only support traditional communications, but also support device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (ST) in the WLAN, for example, a cellular phone, a cordless phone, a Session Initiation Protocol (SIP) phone, a wireless local loop (WLL) STA, a personal digital assistant (PDA), a hand-held device with a wireless communication capability, a computing device or other processing devices connected to a wireless modem, an in-vehicle device, a wearable device, a terminal device in a next generation communication system (e.g., the NR network), a terminal device in an evolved public land mobile network (PLMN) network, or the like.

In the embodiments of the present disclosure, the terminal device is deployed on land (e.g., indoors or outdoors, or handheld, wearable, or vehicle-mounted deployment); or the terminal device may be deployed on water (for example, on a ship); or the terminal device may be deployed in the air (e.g., on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example but not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

In some embodiments of the present disclosure, the network device is a device for communication with a mobile device, and the network device is an access point (AP) in a WLAN, an evolutional node B (which is also referred to as an eNB or eNode B) in the LTE system, a relay station or an AP, an in-vehicle device, a wearable device, a network device (gNB) in an NR network, a network device in a future evolved PLMN network, or a network device in an NTN network.

By way of example but not limitation, in the embodiments of the present disclosure, the network device has mobile characteristics. For example, the network device is a mobile device. In some embodiments, the network device is a satellite or a balloon station. For example, the satellite is a low earth orbit (LEO) satellite, a medium earth orbit (MEO) satellite, a geostationary earth orbit (GEO) satellite, a high elliptical orbit (HEO) satellite, or the like. In some embodiments, the network device is a base station installed in locations such as land and water.

In some embodiments of the present disclosure, the network device provides services for cells, and the terminal device communicates with the network device over transmission resources (e.g., frequency domain resources or frequency spectrum resources) used by the cell, which is a cell corresponding to the network device (e.g., a base station). The cell is a base station corresponding to a macro base station or a small cell. The small cell herein includes a metro cell, a micro cell, a pico cell, or a femto cell. The small cells are characterized by a small coverage area and low transmission power, which are suitable for providing high-speed data transmission services.

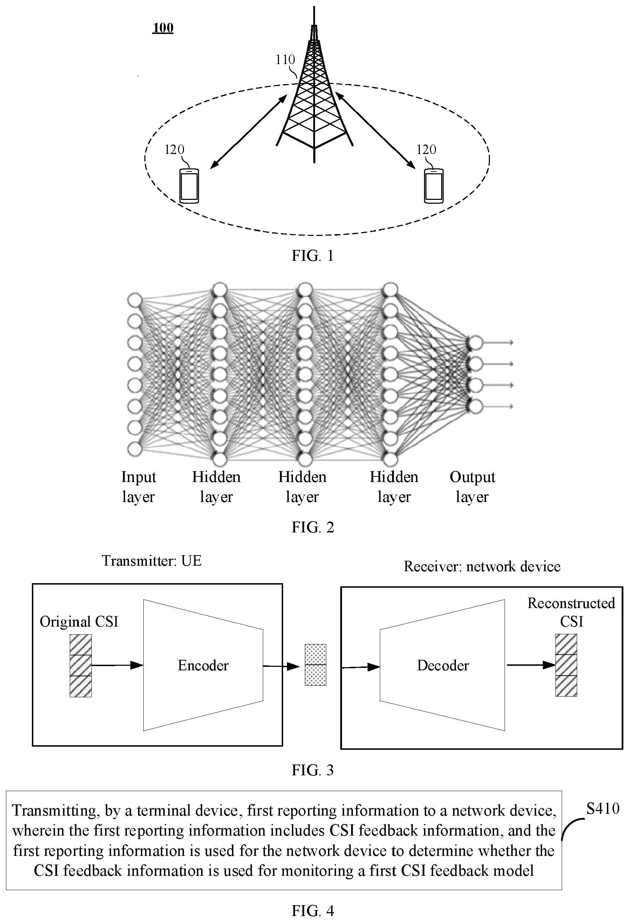

FIG. 1 illustrates a communication system 100 as an example. The communication system includes a network device 110 and two terminal devices 120. In some embodiments, the communication system 100 includes a plurality of network devices 110, and the coverage area of each of the network devices 110 includes other numbers of terminal devices 120, which are not limited in the embodiments of the present disclosure.

In some embodiments, the communication system 100 further includes a mobility management entity (MME), an access and mobility management function (AMF), or another network entities, which is not limited in the embodiments of the present disclosure.

The network device may further include an access network device and a core network device. That is, the wireless communication system further includes a plurality of core networks configured to communicate with the access network device. The access network device may be an LTE system, an NR system, an evolutional node B (which is also referred to as an eNB or eNode B), a macro eNB, a micro eNB (which is also referred as a "small eNB), a pico eNB, an AP, or a transmission point (TP), a new generation Node B (gNodeB) or the like in an authorized auxiliary access long-term evolution (LAA-LTE) system.

It should be understood that a device having a communication function in the network or system is referred to as a communication device. Taking the communication device illustrated in FIG. 1 as an example, the communication device includes a network device and a terminal device that have a communication function, and the network device and the terminal device are specific devices in the embodiments of the present disclosure, which are not elaborated herein any further. The communication device may further include other devices in the communication system, such as a network controller, an MME, or other network entities, which is not limited in the embodiments of the present disclosure.

It should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

To facilitate understanding of the technical solutions according to the embodiments of the present disclosure, the related techniques of the embodiments of the present disclosure are described hereinafter. The related techniques hereinafter, as optional solutions, may be combined with the technical solutions according to the embodiments of the present disclosure in any way, and all combinations fall within the protection scope of the embodiments of the present disclosure.

### (1) Artificial Intelligence

In recent years, very significant results have been achieved on the research on artificial intelligence (AI) represented by neural networks in many fields, and the AI will also play an important role in people's production and life for a long time in the future. In particular, as an important research direction of the AI technology, machine learning (ML), by taking advantage of the nonlinear processing capability of the neural network (NN), has successfully solved many problems that were previously difficult to handle. ML has even demonstrated superior performance compared to humans in fields such as image recognition, speech processing, natural language processing, and gaming, and thus has received more and more attention recently.

A common training model in AI is an artificial neural network. The AI network creates a model based on training data, which is generally for a more accurate prediction. FIG. 2 is a schematic diagram of a neural network. As illustrated in FIG. 2, the neural network generally adopts a multi-layer design (Optionally, the multi-layer includes an input layer, a hidden layer, and an output layer). Through feature learning by layer-by-layer training using a multi-layer neural network, the learning and processing capabilities of the neural network are greatly increased, and the neural network is widely applied in fields such as mode recognition, signal processing, optimization of combination, and abnormity detection.

The existing research has illustrated that AI can model and learn in complex and unknown environments, and has significant application potential in many aspects such as channel prediction, intelligent signal generation and processing, network status tracking and intelligent scheduling, and optimization of network deployment. AI is expected to promote the evolution of future communication paradigms and the transformation of network architectures, and is of great significance and value to the research of 6G technology.

### (II) Life cycle of AI/ML

The life cycle of AI/ML generally includes the following aspects.

Determining the service objective: this process generally begins with determining the service objective of implementing the machine learning model.

Data collection and exploration: under the guidance of an established service objective, related data is collected for an AI/ML task, and then exploratory data analysis and data visualization are carried out to understand what available data provides and what processes are needed to prepare the data prior to model training.

Data processing and feature engineering: original data is converted in order to better meet the service objective and prepare for the model. This process includes data cleaning, dividing the data into training sets, validation sets and test sets, and feature engineering. The feature engineering is a process of converting data to better represent the service objective. Some automatic ML (AutoML) tools are available to achieve automated feature engineering. Other data preparation processes include excluding outliers, handling missing values, masking sensitive data, data labeling, and the like.

Model training: an AI/ML model is trained based on prepared training data. The training process is iterative. Different models and training datasets are tested, and an appropriate model is selected with its hyper-parameters being fine-tuned to achieve the best performance. The hyper-parameters refer to model parameters that affect the learning process (such as the size of the neural network), and these parameters are not inferred from data.

Model testing and validation: the model is checked based on different evaluation metrics (such as accuracy) to ensure that the predictive performance of the model can totally meet use cases. Before deployment, other potential issues of model performance are addressed, e.g., excessive resource demands and insufficient performance. Under excessive resource demands, the model consumes a large amount of memory or needs a long processing time, and the cost of deploying the model may outweigh its benefits to the service. In a case of insufficient performance, the model is incapable of accurately identifying the accuracy of its own predictions, and it is costly for the process in a case of false reporting. Therefore, all predictions need to reviewed manually. The model may not have high accuracy, and thus offers limited benefits.

Model deployment: the selected and fine-tuned model is deployed for prediction. The types of deployment include the following.

Online deployment: the model is deployed via API, responding to requests in real time and providing prediction services.

Batch deployment: the model is integrated into a batch prediction system.

Embedded model: the model is embedded into an edge or mobile device.

Model monitoring: after deployment, the performance of the model is monitored to ensure the model performs well over time. For example, an AI/ML model deployed a week ago may not be able to accurately perform tasks if the AI/ML model has not been continuously improved. For a model that is trained at a specific time interval, a new iteration of the model development process may be initiated.

### (3) AI-based CSI feedback in an NR system

Given the remarkable success of AI technology, especially deep learning, in areas such as computer vision and natural language processing, attempts have been made to use deep learning in the communication field to solve technical problems that are difficult to address using traditional communication methods, such as deep learning. The commonly used neural network architecture in deep learning is nonlinear and data-driven, and can perform feature extraction on actual channel matrix data and restore the channel matrix information compressed and fed back by the UE on the base station as much as possible. In this way, it is possible to reduce the CSI feedback overhead while restoration of channel information is ensured. In the CSI feedback based on deep learning, channel information is considered as to-be-compressed images. By compressing and feedbacking the channel information using a deep learning autoencoder and reconstructing the compressed channel image at the transmitter, the channel information can be retained to a greater extent.

A typical CSI feedback system is illustrated in FIG. 3. The entire feedback system is an autoencoder structure, and includes an encoder part and a decoder part, which are deployed at the transmitter and the receiver, respectively. Subsequent to acquiring channel information through channel estimation, the transmitter compresses and encodes the channel information matrix using the neural network of the encoder and feedbacks the compressed bitstream to the receiver via an air interface feedback link. The receiver restores, using the decoder, the channel information based on the feedback bitstream to acquire the complete feedback channel information. The network model structures inside the encoder and decoder illustrated in FIG. 3 can be flexibly designed.

To ensure the CSI feedback performance, it is necessary to monitor the model and collect model monitoring data. A common method for collecting the model monitoring data is to collect the original CSI data of the environment and periodically report the collected CSI data to a model monitoring device. In the data collection process, cross-device transmission of data needs to be independently completed in the existing service process. However, the original CSI data has a large dimension, and the original CSI data is transmitted via the air interface from the data generation device to the device that performs model monitoring. Data transmission occupies a large amount of air interface resources. The resource overhead is larger for model monitoring with a smaller time granularity, which is almost unacceptable. If model monitoring is performed on a large scale, an effective warning cannot be given timely for the adverse effects brought by data drifts.

The technical solutions according to the embodiments of the present disclosure are mainly aimed at solving the above technical problems.

FIG. 4 illustrates a schematic flowchart of a method for transmitting information according to some embodiments of the present disclosure. The method is optionally applicable to, but not limited to, the system illustrated in FIG. 1. The method includes at least part of the following contents.

In S410, a terminal device transmits first reporting information to a network device, wherein the first reporting information includes CSI feedback information, and the first reporting information is used for the network device to determine whether the CSI feedback information is used for monitoring a first CSI feedback model.

In the embodiments of the present disclosure, the CSI feedback information is used for the network device to determine the CSI reported by the terminal device, such that the network device can reasonably configure the data transmission method and/or monitor the model. In some embodiments, the CSI feedback information includes the CSI itself or compressed data acquired by compressing the CSI by the terminal device.

In the embodiments of the present disclosure, the first CSI feedback model is configured to encode and decode the CSI to achieve compression and feedback on the CSI.

For example, the first CSI feedback model is an autoencoder model, e.g., an AI-based autoencoder model. The autoencoder model includes an encoder and a decoder. The encoder is deployed in the terminal device, and the encoder is configured to acquire first encoded information by encoding the first CSI (original CSI) that is acquired based on channel estimation so as to take the first encoded information as the CSI feedback information for transmission to the network device over the first reporting information. The decoder is deployed in the network device, and the decoder is configured to acquire second CSI (reconstructed CSI) by decoding the first encoded information and configure the data transmission method based on the second CSI. In some embodiments, the first CSI feedback model is configured for regular reporting of CSI.

In the embodiments of the present disclosure, the CSI feedback information is used for monitoring the first CSI feedback model or not used for monitoring the first CSI feedback model. That is, the CSI feedback information may be regularly reported information of CSI and used for the network device to configure the data transmission method. For example, the CSI feedback information includes the above first encoded information. The CSI feedback information may also be information used for monitoring the first CSI feedback model. For example, the CSI feedback information is the CSI itself or compressed data acquired by compressing the CSI in other manners.

In some embodiments, in a case where the CSI feedback information is used for monitoring the first CSI feedback model, the CSI feedback information is further used for the network device to determine the CSI required for configuring the data transmission method. That is, in a case where the CSI feedback information is used for monitoring the first CSI feedback model, the transmission of the first reporting information is also taken as a reporting of CSI.

In some embodiments, in a case where the CSI feedback information is used for monitoring the first CSI feedback model, the CSI feedback information is not used for the network device to determine the CSI required for configuring the data transmission method.

In the embodiments of the present disclosure, the first reporting information is not only used for carrying the CSI feedback information but also used for indicating whether the CSI feedback information is used for monitoring the first CSI feedback model. The first reporting information may either explicitly indicate whether the CSI feedback model is used for the above monitoring (e.g., the first reporting information includes a piece of explicit indication information) or implicitly indicate whether the CSI feedback model is used for the above monitoring (e.g., indicating over the frequency-domain position, the time-domain position, or other parameters of the first reporting information).

According to the above method, the terminal device transmits the first reporting information carrying the CSI feedback information to the network device, and the network device determines, based on the first reporting information, whether the CSI feedback information is used for monitoring the first CSI feedback model. By adding this function of the first reporting information, regular reporting of the CSI feedback information and reporting of the model monitoring data can be differentiated, such that the regular reporting process of the CSI feedback information can be reused for the reporting of the model monitoring data, without the need to add an independent process of transmitting the model monitoring data. Thus, the resource overhead for reporting the model monitoring data can be reduced.

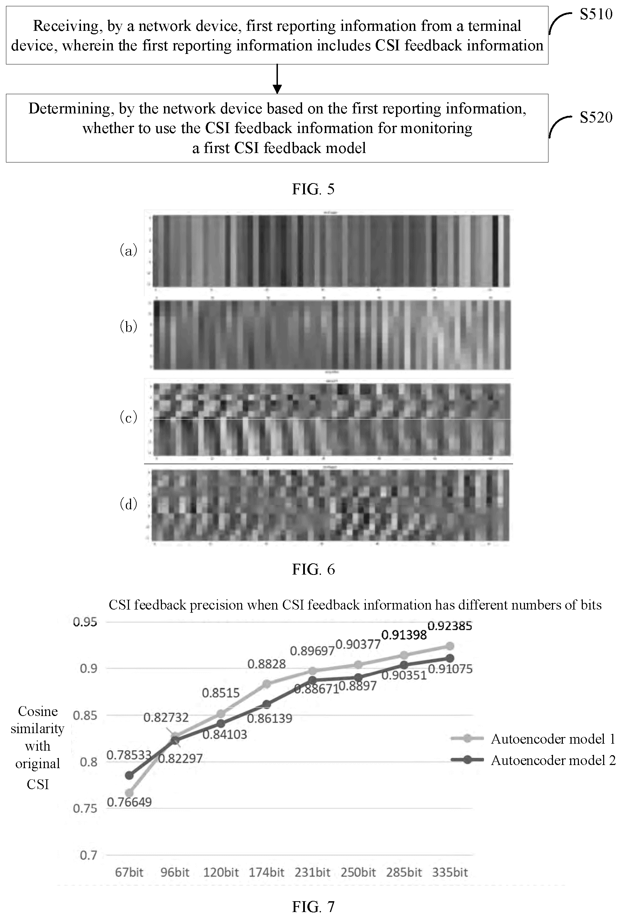

FIG. 5 illustrates a schematic flowchart of another method for transmitting information according to some embodiments of the present disclosure. The method is optionally applicable to, but not limited to, the system illustrated in FIG. 1. The method includes the following processes.

In S510, a network device receives first reporting information from a terminal device, wherein the first reporting information includes CSI feedback information.

In S520, the network device determines, based on the first reporting information, whether to use the CSI feedback information for monitoring a first CSI feedback model.

For specific details of the method for transmitting information in the present embodiment, reference may be made to the related description in the above embodiments, which is not elaborated herein any further for brevity.

In some embodiments, in a case where the CSI feedback information is not used for monitoring the first CSI feedback model, the CSI feedback information includes first encoded information; wherein the first encoded information is acquired by the terminal device by encoding first CSI using an encoder in the first CSI feedback model, and the first encoded information is used for the network device to acquire second CSI by decoding using a decoder in the first CSI feedback model.

That is, in some embodiments, the method for transmitting information further includes:
in a case where the CSI feedback information is not used for monitoring the first CSI feedback model, acquiring, by the network device, second CSI by decoding the first encoded information in the CSI feedback information using a decoder in the second CSI feedback model, wherein the first encoded information is acquired by the terminal device by encoding the first CSI using the encoder in the first CSI feedback model.

For example, the first CSI is CSI determined by the terminal device based on channel estimation, i.e., CSI acquired by measurement on a reference signal. The second CSI is CSI restored by the network device by decoding, and the network device determines the data transmission method based on the second CSI.

In some embodiments, in a case where the CSI feedback information is not used for monitoring the first CSI feedback model, the CSI feedback information includes other information than the first encoded information, that is, the CSI feedback information includes other information which is not acquired based on the first CSI feedback model. Therefore, the processing result of the first CSI feedback model can be evaluated based on information acquired in different processing manners, thereby achieving monitoring of the model.

For example, every 10 pieces of first reporting information transmitted from the terminal device include 9 pieces of first reporting information for regular reporting and 1 piece of first reporting information for reporting of the model monitoring data. In this case, the CSI feedback information in each piece of the 9 pieces of first reporting information for regular reporting is acquired by encoding the first CSI using the encoder in the first CSI feedback model, and the CSI feedback information in the 1 piece of first reporting information for reporting of the model monitoring data is CSI-related information in other forms.

In some embodiments, in a case where the CSI feedback information is used for monitoring the first CSI feedback model, the CSI feedback information includes first CSI or compressed data of the first CSI.

That is, in some embodiments, the method for transmitting information further includes:
in a case where the CSI feedback information is used for monitoring the first CSI feedback model, monitoring, by the network device, the CSI feedback model based on the first CSI in the CSI feedback information or the compressed data of the first CSI in the CSI feedback information.

In an implementation, the CSI feedback information in the first reporting information for reporting of the model monitoring data is original CSI, such that the precision of the data used for model monitoring can be ensured and the accuracy of monitoring evaluation can be improved.

In another implementation, the CSI feedback information in the first reporting information for reporting of the model monitoring data is compressed data of the first CSI. The compressed data is different from the first encoded information, that is, the compressed data is acquired in other processing manners. The compressed data acquired in other processing manners can also be used to measure the accuracy of the processing result of the first CSI feedback model in some extent, achieving model monitoring and at the same time reducing the resource overhead in the case of reporting the model monitoring data.

In some embodiments, the number of bits in the compressed data of the first CSI is greater than the number of bits in the first encoded information acquired by encoding the first CSI using the encoder in the first CSI feedback model.

That is, the number of bits in the CSI compressed data used for reporting the model monitoring data is greater than the number of bits in the output information of the encoder in the first CSI feedback model. Therefore, the precision of the model monitoring data is higher than the precision of the processing information of the first CSI feedback model, and the processing result of the first CSI feedback model can be accurately evaluated based on the model monitoring data.

It is understandable that, in a case where the precision of the model monitoring data is higher than the precision of the processing information of the first CSI feedback model, if the model monitoring data is also used for one CSI reporting, the CSI feedback precision can be improved in the extent.

In some embodiments, the compressed data of the first CSI includes second encoded information acquired by the terminal device by encoding the first CSI using an encoder in a second CSI feedback model. That is, the CSI compressed data used for reporting the model monitoring data may also be acquired using a CSI feedback model.

In some embodiments, the second CSI feedback model is also an autoencoder model, including an encoder and a decoder. The encoder is deployed in the terminal device, and the encoder is configured to acquire second encoded information by encoding the first CSI so as to take the second encoded information as the CSI feedback information used for monitoring the model for transmission to the network device. The decoder is deployed in the network device, and the decoder is configured to acquire third CSI by decoding the second encoded information, take the third CSI as the first CSI (i.e., as original and accurate CSI, but an error may be present in actual applications), and evaluate and monitor the first CSI feedback model based on the third CSI.

In some embodiments, the precision of the second CSI feedback model is higher than the precision of the first CSI feedback model, for example, the number of bits in the second encoded information output by the encoder in the second CSI feedback model is greater than the number of bits in the first encoded information output by the encoder in the first CSI feedback model.

In some embodiments, monitoring, by the network device, the first CSI feedback model based on the first CSI in the CSI feedback information or the compressed data of the first CSI in the CSI feedback information includes:
acquiring, by the network device, third CSI by decoding the second encoded information in the CSI feedback information using the decoder in the second CSI feedback model;
acquiring, by the network device, fourth CSI by processing the third CSI using the first CSI feedback model; and
monitoring, by the network device, the first CSI feedback model based on the third CSI and the fourth CSI.

In some embodiments, the network device monitors the first CSI feedback model based on the similarity or difference between the third CSI and the fourth CSI. For example, a first indicator representing the similarity or difference between the third CSI and the fourth CSI is taken as a performance monitoring indicator of the first CSI feedback model. For example, the first indicator includes one or more indicators representing the difference, such as the number of error bits in the fourth CSI, the proportion of error bits, the mean square error between the third CSI and the fourth CSI, the normalized mean square error, the Euclidean distance, and the Hamming distance that are determined based on the third CSI. Alternatively, the first indicator includes the cosine similarity or other indicators representing the similarity between the third CSI and the fourth CSI.

According to the above embodiments, the network device monitors the first CSI feedback model based on the processing information of the second CSI feedback model. To facilitate understanding of the technical effects, the characteristics of the CSI are introduced hereinafter in combination with the accompanying drawings. FIG. 6 illustrates a schematic diagram of a visual result of a plurality of CSI data in a real system. As illustrated in FIG. 6, under the combined influence of the complex wireless environment and the system factors, CSI samples are diversified, for example, samples (a)-(d) in FIG. 6. Different samples carry different amounts of information. Some sample sub-bands have a higher correlation and are relatively easy to compress. Thus, the decoding precision is higher. However, some samples are more complex and carry more information. Under the same feedback overhead, the restoration precision is relatively poor. Whether it seems more complex or simpler, CSI data itself has a large degree of redundancy. FIG. 7 illustrates a schematic diagram of a comparison of CSI feedback precision when the CSI feedback information has different numbers of bits. As illustrated in FIG. 7, for both autoencoder model 1 and autoencoder model 2, as the number of bits in the CSI feedback information increases, the feedback precision can reach a very high level of precision. The data indicates that CSI has certain redundancy. Based on this, in the embodiments of the present disclosure, the second CSI feedback model is adopted to process the original first CSI, the processing result of the encoder in the second CSI feedback model is taken as the CSI feedback information in the air interface transmission, and the third CSI decoded by the decoder in the second CSI feedback model is used to monitor the first CSI feedback model. Thus, the redundancy of CSI can be fully utilized. Under the premise of ensuring high-precision feedback, the CSI model monitoring data can also be compressed to a certain extent (the CSI feedback problem itself is a lossy compression problem, and the credibility of model monitoring will not be affected by the high-precision feedback), thereby further reducing the transmission overhead caused by model monitoring.

In some embodiments, the method for transmitting information further includes:
acquiring, by the terminal device, third CSI by decoding the second encoded information using the decoder in the second CSI feedback model;
acquiring, by the terminal device, fourth CSI by processing the third CSI using the first CSI feedback model; and
monitoring, by the terminal device, the first CSI feedback model based on the third CSI and the fourth CSI.

It can be seen that in the above embodiments, the terminal device transmits the second encoded information to the network device, such that the network device can monitor the first CSI feedback model based on the second encoded information. On this basis, the terminal device also monitors the first CSI feedback model based on the second encoded information. In this way, the terminal device and the network device perform processing based on the consistent model monitoring data, which can ensure that the terminal device and the network device have the same evaluated monitoring results for the first CSI feedback model, and the network device does not need to transmit the evaluated monitoring results to the terminal device, thereby further reducing the transmission resource overhead in the system.

In some embodiments, the first reporting information includes type indication information, wherein the type indication information is used to indicate whether the CSI feedback information is used for monitoring the first CSI feedback model.

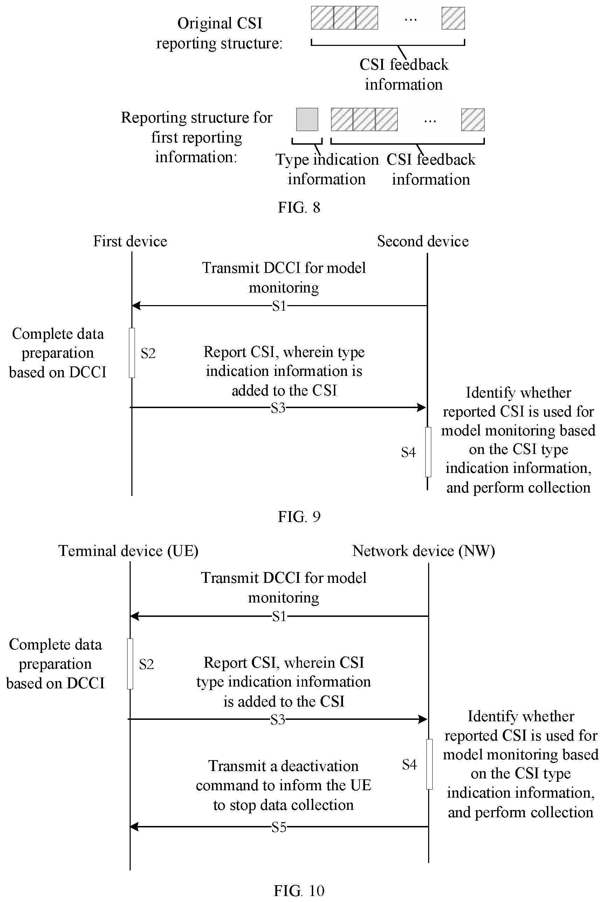

FIG. 8 illustrates a schematic structural diagram of first reporting information according to some embodiments of the present disclosure. As illustrated in FIG. 8, compared with the reporting structure of the original CSI, type indication information is added in the reporting structure of the first reporting information. In the above embodiments, the first reporting information explicitly indicates, by carrying the type indication information, whether the CSI feedback information is used for model monitoring. As such, the CSI reporting process can be reused for reporting the model monitoring data.

In some embodiments, the related parameter of the first reporting information is used for the network device to determine whether the CSI feedback information is used for monitoring the first CSI feedback model. That is, whether the CSI feedback information is used for monitoring the first CSI feedback model is implicitly indicated over the related parameter of the first reporting information. For example, the parameter used for reporting the model monitoring data is predetermined based on an agreement in a protocol or a system convention, or the parameter used for reporting the model monitoring data is configured by a network. When reporting the CSI feedback information used for model monitoring, the terminal device transmits the first reporting information based on the parameter. As such, the network device can determine, based on the related parameter of the first reporting information, whether the CSI feedback information in the received first reporting information is used for model monitoring.

In some embodiments, the related parameter of the first reporting information includes a transmission time of the first reporting information.

It should be noted that the above explicit indication method and implicit indication method may also be used in combination. Specifically, the first reporting information may or may not include the type indication information. In a case where the first reporting information includes the type indication information, the network device determines, based on the type indication information, whether the CSI feedback information is used for monitoring the first CSI feedback model. In a case where the first reporting information does not include the type indication information, the network device determines, based on the related parameter of the first reporting information, whether the CSI feedback information is used for monitoring the first CSI feedback model.

For example, the terminal device and the network device pre-agree on the reporting period of the model monitoring data. After the reporting period is agreed upon, the first reporting information transmitted by the terminal device for the first time for reporting the model monitoring data includes the type indication information, such that the network device uses the CSI feedback information in the first reporting information for model monitoring. The network device determines, based on the pre-agreed period and the transmission time of the first reporting information, the transmission time of the first reporting information for reporting the model monitoring data subsequently. Thus, in a case where the network device receives the first reporting information later, the network device can determine, based on the transmission time, whether the CSI feedback information in the first reporting information is used for model monitoring, without the need to carry the type indication information in the first reporting information.

In some embodiments, the mechanism of carrying the CSI feedback information used for model monitoring in the first reporting information is configured or triggered by the network device. Specifically, before the network device receives the first reporting information from the terminal device, the above method for transmitting information further includes: transmitting, by the network device, configuration information to the terminal device; wherein the configuration information is used to instruct the terminal device to transmit the CSI feedback information used for monitoring the first CSI feedback model.

Accordingly, in some embodiments, before the terminal device transmits the first reporting information to the network device, the method for transmitting information further includes: receiving, by the terminal device, configuration information from the network device, wherein the configuration information is used to instruct the terminal device to transmit the CSI feedback information used for monitoring the first CSI feedback model.

For example, the configuration information is also referred to as data collection configuration information (DCCI).

According to the above embodiments, the network device configures or triggers, by transmitting the configuration information, the terminal device to transmit the CSI feedback information used for monitoring the first CSI feedback model, thereby supporting the reporting of the model monitoring data in a plurality of different configurations. Thus, the flexibility in reporting the model monitoring data is improved.

In some embodiments, the configuration information is used to indicate at least one of:
the transmission time of the CSI feedback information;
the number of bits in the CSI feedback information; or
the identifier (ID) of the second CSI feedback model for acquiring the CSI feedback information.

In an implementation, the configuration information is used to indicate the transmission time of CSI feedback information used for monitoring the first CSI feedback model. For example, the configuration information includes the transmission period of the CSI feedback information, and different reporting periods for the model monitoring data are configured based on the frequency requirements of model monitoring. Alternatively, the configuration information further includes the time interval between the transmission time of the CSI feedback information and the configuration information, wherein the time interval is positioned in any time unit such as seconds or milliseconds, that is, any configuration related to the sampling timing of the monitoring data can be used, which can increase the flexibility of model monitoring.

**In** another implementation, the configuration information is used to indicate the number of bits in the CSI feedback information, such that different numbers of bits can be configured based on the precision requirements of different model monitoring.

**In** another implementation, the configuration information is used to indicate the ID of the second CSI feedback model. Specifically, a plurality of CSI feedback models are deployed in the terminal device, and based on the ID indicated in the configuration information, the second CSI feedback model corresponding to the ID is selected or switched for use among the plurality of CSI feedback models for reporting the model monitoring data subsequently. In some embodiments, different CSI feedback models have different levels of precision, e.g., different numbers of bits corresponding to the CSI feedback information.

It should be noted that the configuration information may not only be used to indicate one type of information but also be used to indicate a plurality of types of information. For example, the configuration information is used to indicate the transmission time of the CSI feedback information used for monitoring the first CSI feedback model and the number of bits in the CSI feedback information. Alternatively, the configuration information is used to indicate the transmission time of the CSI feedback information and the ID of the second CSI feedback model. In actual applications, the configuration information is set based on scenario requirements, system conventions, agreements in protocols or the like, which is not elaborated herein any further.

**In** some embodiments, the above method for transmitting information further includes: transmitting, by the network device, deactivation information to the terminal device, wherein the deactivation information is used to instruct the terminal device to stop transmitting the CSI feedback information used for monitoring the first CSI feedback model.

Accordingly, in some embodiments, the above method for transmitting information further includes: receiving, by the terminal device, the deactivation information from the network device, wherein the deactivation information is used to instruct the terminal device to stop transmitting the CSI feedback information used for monitoring the first CSI feedback model.

According to the above embodiments, the network device transmits the deactivation information in a case where the network device does not need to collect the model monitoring data, so as to stop reporting the model monitoring data, achieving the switching and compatibility with the original CSI reporting mechanism. Thus, unnecessary high-precision reporting of CSI feedback information can be avoided, which is conducive to controlling the transmission resource overhead.

To facilitate understanding of the above embodiments, a plurality of application examples are provided hereinafter.

### Frist application example

FIG. 9 illustrates a schematic diagram of a method for transmitting information in a first application example of the present disclosure. The specific processes are as follows.

In S1, a second device transmits DCCI for model monitoring to trigger a first device to collect model monitoring data and give a guide on the reporting period and the number of feedback bits.

In S2, the first device initiates data collection that is used for model monitoring based on the DCCI transmitted in S1, determines the target reporting time and the target number of CSI feedback bits, and compresses the CSI into bitstreams (data streams in the form of bits).

In S3, the reporting process of the model monitoring data is based on the original CSI reporting process, and a piece of CSI type indication information (CSI-type) is added in the original CSI to differentiate whether the CSI at the current moment is used for model monitoring.

In S4, the second device receives the CSI from the first device, and determines, based on the CSI-type, whether the current CSI is used for model monitoring. If the current CSI is used for model monitoring, the second device parses the model monitoring data based on the DCCI and completes a sample collection.

The above working process is applicable to different CSI solutions, and the form of the specific reporting content is also diversified.

The second application example and the third application example hereinafter are provided for different CSI model monitoring solutions, in which signaling interaction related to DCCI and CSI-type is introduced in detail.

### Second application example

In the second application example, model monitoring is performed in a single-side monitoring manner.

FIG. 10 illustrates a schematic diagram of a method for transmitting information in a second application example of the present disclosure. In this application example, the AI-based CSI feedback model (including an encoder and a decoder) is completely monitored on the network (NW) device. The specific process is as follows.

In process S1, the NW transmits DCCI for model monitoring to trigger the UE to collect model monitoring data and give a guide on the UE about the opportunity of reporting the monitoring data and on the number of feedback bits. Specifically, four different data collection periods and two different numbers of feedback bits are supported in this application example (More or less data collection periods and more or less numbers of feedback bits may be supported, and the present application example is merely for the purpose of illustration but is not limiting). The DCCI is represented by 3 bits, wherein part 1 (the first two bits) is used to indicate the data collection period, and the part 2 (the third bit) is used to indicate the number of feedback bits.

| DCCI-Part 1 | DCCI-Part 2 |
|---|---|
| First two bits of DCCI | Third bit of DCCI |
| 1/10 /100 /1000 (CSI feedback period) | Predetermined number of feedback bits: 285/335 (bits) |

Based on the above description, DCCI-Part 1 is indicated by 2 bits, with definitions for different values of the 2 bits as follows:
00: 1 CSI feedback period (i.e., each CSI feedback is used for reporting model monitoring data);
01: 10 CSI feedback periods (i.e., model monitoring data is reported once in every 10 CSI feedbacks);
10: 100 CSI feedback periods (i.e., model monitoring data is reported once in every 100 CSI feedbacks);
11: 1000 CSI feedback periods (i.e., model monitoring data is reported once in every 1000 CSI feedbacks).

DCCI-part 2 is indicated by 1 bit, with definitions for different values of the 1 bit as follows:
0: CSI data used for model monitoring is fed back using 285 bits;
1: CSI data used for model monitoring is fed back using 335 bits.

In process S2, the UE initiates data preparation for model monitoring based on the DCCI transmitted in S1. When the current time is the target reporting time, the UE compresses the CSI into bitstreams (data streams in bit form) that satisfy the target number of CSI feedback bits.

Specifically, the compression and feedback process for the model monitoring data is the same as the feedback manner described in the foregoing related art (3), with the difference that the autoencoder model used in the compression and feedback for the model monitoring data is different from the autoencoder model used in regular CSI reporting. Compared with the autoencoder model used in regular CSI reporting (which is referred to as a general CSI feedback model, i.e., the above first CSI feedback model), a higher-precision (corresponding to the number of feedback bits in DCCI-Part 2) CSI feedback model (which is referred to as a model monitoring data feedback model, i.e., the above second CSI feedback model) is adopted. The higher-precision CSI feedback model includes an encoder and a decoder, which are respectively deployed at a transmitter and a receiver for preprocessing and restoration of model monitoring data. Training of the autoencoder model used for the feedback model monitoring data is not limited.

In process S3, the reporting process for the model monitoring data is based on the original CSI reporting process. To distinguish whether the current CSI is used for model monitoring, CSI type indication information (CSI-type) is added to the original CSI, the setting of which is as illustrated in FIG. 8.

Specifically, in the present application example, 1 bit is used in the CSI-type to indicate whether the CSI data reported at the current moment is usable for model monitoring. Definitions for different values of the 1 bit are as follows:
0: the feedback bitstream originates from a general CSI feedback model and is unusable for model monitoring;
1: the feedback bitstream originates from a model monitoring data feedback model and is usable for model monitoring.

In process S4, the NW receives CSI from the UE, and determines, based on the CSI-type, whether the current CSI is usable for model monitoring. If the current CSI is usable for model monitoring, the NW uses the decoder corresponding to the number of feedback bits in DCCI-Part 2 to restore the CSI data, completing a sample collection of model monitoring data.

In process S5: the NW, when necessary, transmits a deactivation command to stop the collection of model monitoring data. This process is configured based on the requirement on the model monitoring data volume, and is optional rather than mandatory.

In the present application example, the redundancy of CSI is utilized, and under the premise of ensuring high-precision feedback, the model monitoring data is compressed to a certain extent. Since the compression process is the same as the AI-based CSI compression and feedback process, data collection for model monitoring can be integrated into the existing CSI feedback process, thereby achieving more flexible model monitoring with less overhead. In addition, the CSI feedback precision at the time of reporting the CSI monitoring data can be increased to some extent.

It is understandable that in some scenarios, model monitoring can be completely implemented on the UE alone. Since CSI measurements originate from the UE, when the UE performs model monitoring alone, the original CSI acquired from the UE by measurements can be used to evaluate and monitor the first CSI feedback model, which does not involve data transmission and thus does not involve signaling interactions for model monitoring data transmission.

### Third application example

In the third application example, model monitoring is performed in a dual-side monitoring manner.

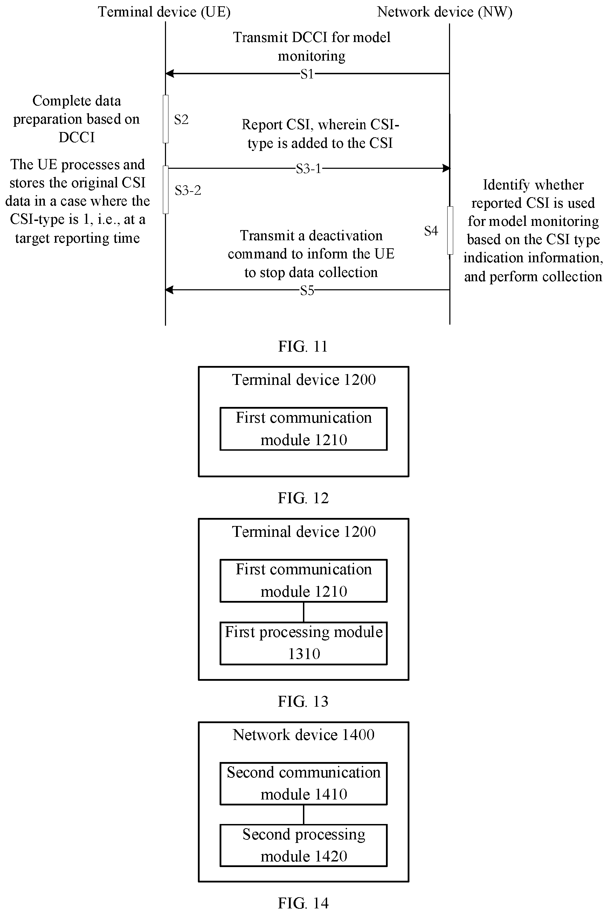

FIG. 11 illustrates a schematic diagram of a method for transmitting information in a third application example of the present disclosure. Different from the second application example, in this application example, a method for collecting model monitoring data in a solution where the model monitoring is performed on both the NW and the UE. Since the UE and the NW both require CSI data used for model monitoring, the UE may directly collect CSI, and data at the NW needs to be reported from the UE. To ensure that the data is consistent with the data at the NW, the NW needs to transmit configuration information to synchronize the sampling timing.

In this application example, the AI-based CSI feedback model (including an encoder and a decoder) is monitored on both the UE and the NW. The specific process is as follows.

In process S1, the NW transmits DCCI to trigger the UE to collect model monitoring data and give a guide on the UE about the period of reporting the monitoring data and on the number of bits. Specifically, two different data collection periods and two different numbers of feedback bits are supported in this application example (More or less data collection periods and more or less numbers of feedback bits may be supported, and the present application example is merely for the purpose of illustration but is not limiting). The DCCI is represented by 2 bits, where part 1 (the first bit) is used to indicate the data collection period, and the part 2 (the second bit) is used to indicate the number of feedback bits.

| DCCI-Part 1 | DCCI-Part 2 |
|---|---|
| First bit of DCCI | Second bit of DCCI |
| 10 /1000 (CSI feedback period) | Predetermined number of feedback bits: 335/435 (bits) |

Based on the above description, DCCI-Part 1 is indicated by 1 bit, with definitions for different values of the 1 bit as follows:
0: 10 CSI feedback periods;
1: 1000 CSI feedback periods.

DCCI-Part 2 is indicated by 1 bit, with definitions for different values of the 1 bit as follows:
0: CSI data used for model monitoring is fed back using 335 bits;
1: CSI data used for model monitoring is fed back using 435 bits.

It should be noted that, in other examples, the CSI data used for model monitoring may also be fed back using other numbers of bits. That is, the predetermined number of feedback bits may also include other values, such as 250 and 285 where the feedback precision (referring to FIG. 7) may reach above 90%. For example, DCCI-Part 2 may also include 2 bits, indicating one of the predetermined numbers of feedback bits of 250, 285, 335 or 435.

In process S2, the UE initiates data preparation for model monitoring based on the DCCI transmitted in S1. When the current time is the reporting time for the model monitoring data in the DCCI, the UE compresses the CSI at a high precision into bitstreams that satisfy the target number of CSI feedback bits for feedback reporting.

Specifically, the compression and feedback process for the model monitoring data is the same as the feedback manner described in the foregoing related art (3), with the difference that the autoencoder model used in the compression and feedback for the model monitoring data is different from the autoencoder model used in regular CSI reporting. Compared with the autoencoder model used in regular CSI reporting (which is referred to as a general CSI feedback model, i.e., the above first CSI feedback model), a higher-precision (corresponding to the number of feedback bits in DCCI-Part 2) CSI feedback model (which is referred to as a model monitoring data feedback model, i.e., the above second CSI feedback model) is adopted. The higher-precision CSI feedback model includes an encoder and a decoder, which are respectively deployed at a transmitter and a receiver for preprocessing and restoration of model monitoring data. Training of the autoencoder model used for the feedback model monitoring data is not limited.

Additionally, to ensure the consistency between the model monitoring data collected at the UE and the model monitoring data collected at the NW, a decoder of the model monitoring data compression feedback model also needs to be deployed at the UE, and the feedback bitstream transmitted to the network device is input into the decoder, thereby performing a monitoring data restoration process at the UE. As such, it is ensured that the data collected at the UE is the data restored at the network.

In process S3, the reporting process for the model monitoring data is based on the original CSI reporting process. To distinguish whether the current CSI is used for model monitoring, CSI type indication information (CSI-type) is added to the original CSI, the setting of which is as illustrated in FIG. 8.

Specifically, in the present application example, 1 bit is used in the CSI-type to indicate whether the CSI data reported at the current moment is usable for model monitoring. Definitions for different values of the 1 bit are as follows:
0: the feedback bitstream originates from a general CSI feedback model and is unusable for model monitoring;
1: the feedback bitstream originates from a model monitoring data feedback model and is usable for model monitoring.

In process S4, the NW receives CSI from the UE, and determines, based on the CSI-type, whether the current CSI is usable for model monitoring. If the current CSI is usable for model monitoring, the NW uses the decoder corresponding to the number of feedback bits in DCCI-Part 2 to restore the CSI data, completing a sample collection of model monitoring data.

In process S5: the NW, when necessary, transmits a deactivation command to stop the collection of model monitoring data. This process is configured based on the requirement on the model monitoring data volume, and is optional rather than mandatory.

In the present application example, the redundancy of CSI is utilized, and under the premise of ensuring high-precision feedback, the model monitoring data is compressed to a certain extent. Since the compression process is the same as the AI-based CSI compression and feedback process, data collection for model monitoring can be integrated into the existing CSI feedback process, thereby achieving more flexible model monitoring with less overhead. In addition, the CSI feedback precision at the time of reporting the CSI monitoring data can be increased to some extent. Furthermore, in the present application example, the UE implements model monitoring using the data and the manner that are the same as those at the NW, and data interaction between the two sides is not needed, which further reduces the transmission overhead.

FIG. 12 illustrates a schematic block diagram of a terminal device 1200 according to some embodiments of the present disclosure. The terminal device 1200 includes a first communication module 1210.

The first communication module 1210 is configured to transmit first reporting information to a network device, wherein the first reporting information includes CSI feedback information, and the first reporting information is used for the network device to determine whether the CSI feedback information is used for monitoring a first CSI feedback model.

In some embodiments, in a case where the CSI feedback information is not used for monitoring the first CSI feedback model, the CSI feedback information includes first encoded information; wherein the first encoded information is acquired by encoding first CSI using an encoder in the first CSI feedback model, and the first encoded information is used for the network device to acquire second CSI by decoding using a decoder in the first CSI feedback model.

In some embodiments, in a case where the CSI feedback information is used for monitoring the first CSI feedback model, the CSI feedback information includes first CSI or compressed data of the first CSI.

In some embodiments, the number of bits in the compressed data of the first CSI is greater than the number of bits in first encoded information acquired by encoding the first CSI using an encoder in the first CSI feedback model.

In some embodiments, the compressed data of the first CSI includes second encoded information acquired by encoding the first CSI using an encoder in a second CSI feedback model.

In some embodiments, as illustrated in FIG. 13, the terminal device 1200 further includes a first processing module 1310, configured to:
acquire third CSI by decoding the second encoded information using a decoder in the second CSI feedback model;
acquire fourth CSI by processing the third CSI using the first CSI feedback model; and
monitor the first CSI feedback model based on the third CSI and the fourth CSI.

In some embodiments, the first reporting information includes type indication information, wherein the type indication information is used to indicate whether the CSI feedback information is used for monitoring the first CSI feedback model.

In some embodiments, a related parameter of the first reporting information is used for the network device to determine whether the CSI feedback information is used for monitoring the first CSI feedback model.

In some embodiments, the related parameter of the first reporting information includes a transmission time of the first reporting information.

In some embodiments, the first communication module 1210 is further configured to: receive configuration information from the network device, wherein the configuration information is used to indicate to transmit the CSI feedback information used for monitoring the first CSI feedback model.

In some embodiments, the configuration information is used to indicate at least one of:
a transmission time of the CSI feedback information;
a number of bits in the CSI feedback information; or
an ID of a second CSI feedback model used to acquire the CSI feedback information.

In some embodiments, the first communication module 1210 is further configured to: receive deactivation information from the network device, wherein the deactivation information is used to indicate to stop transmitting the CSI feedback information used for monitoring the first CSI feedback model.

The terminal device 1200 in the embodiment of the present disclosure can implement the corresponding functions of the terminal device in the above method embodiments. For the processes, functions, implementations, and beneficial effects of each module (submodule, unit, or component, or the like) of the terminal device 1200, reference may be made to the corresponding descriptions in the above method embodiments and are not elaborated herein any further. It should be noted that the described functions of each module (submodule, unit, or component, or the like) of the terminal device 1200 in the embodiment of the present disclosure may be implemented by different modules (submodules, units, or components, or the like) or by the same module (submodule, unit, or component, or the like).

FIG. 14 illustrates a schematic block diagram of a network device 1400 according to some embodiments of the present disclosure. The network device 1400 includes:
a second communication module 1410, configured to receive first reporting information from a terminal device, wherein the first reporting information includes CSI feedback information; and
a second processing module 1420, configured to determine, based on the first reporting information, whether to use the CSI feedback information for monitoring a first CSI feedback model.

In some embodiments, the second processing module 1420 is further configured to: in a case where the CSI feedback information is not used for monitoring the first CSI feedback model, acquire second CSI by decoding first encoded information in the CSI feedback information using a decoder in the first CSI feedback model; wherein the first encoded information is acquired by the terminal device by encoding first CSI using an encoder in the first CSI feedback model.

In some embodiments, the second processing module 1420 is further configured to: in a case where the CSI feedback information is used for monitoring the first CSI feedback model, monitor the first CSI feedback model based on first CSI in the CSI feedback information or compressed data of the first CSI in the CSI feedback information.

In some embodiments, the number of bits in the compressed data of the first CSI is greater than the number of bits in first encoded information acquired by encoding the first CSI using an encoder in the first CSI feedback model.

In some embodiments, the compressed data of the first CSI includes second encoded information acquired by the terminal device by encoding the first CSI using an encoder in a second CSI feedback model.

In some embodiments, the second processing module 1420 is further configured to:
acquire third CSI by decoding the second encoded information in the CSI feedback information using a decoder in the second CSI feedback model;
acquire fourth CSI by processing the third CSI using the first CSI feedback model; and
monitor the first CSI feedback model based on the third CSI and the fourth CSI.

In some embodiments, the first reporting information includes type indication information, wherein the type indication information is used to indicate whether the CSI feedback information is used for monitoring the first CSI feedback model.

In some embodiments, a related parameter of the first reporting information is used for determining whether the CSI feedback information is used for monitoring the first CSI feedback model.

In some embodiments, the related parameter of the first reporting information includes a transmission time of the first reporting information.

In some embodiments, the second communication module 1410 is further configured to: transmit configuration information to the terminal device, wherein the configuration information is used to instruct the terminal device to transmit the CSI feedback information used for monitoring the first CSI feedback model.

In some embodiments, the configuration information indicates at least one of:
a transmission time of the CSI feedback information;
a number of bits in the CSI feedback information; or
an ID of a second CSI feedback model used to acquire the CSI feedback information.

In some embodiments, the second communication module 1410 is further configured to: transmit deactivation information to the terminal device, wherein the deactivation information is used to instruct the terminal device to stop transmitting the CSI feedback information used for monitoring the first CSI feedback model.

The network device 1400 in the embodiment of the present disclosure can implement the corresponding functions of the network device in the above method embodiments. For the processes, functions, implementations, and beneficial effects of each module (submodule, unit, or component, or the like) of the network device 1400 reference may be made to the corresponding descriptions in the above method embodiments and are not elaborated herein any further. It should be noted that the described functions of each module (submodule, unit, or component, or the like) of the network device 1400 in the embodiment of the present disclosure may be implemented by different modules (submodules, units, or components, or the like) or by the same module (submodule, unit, or component, or the like).

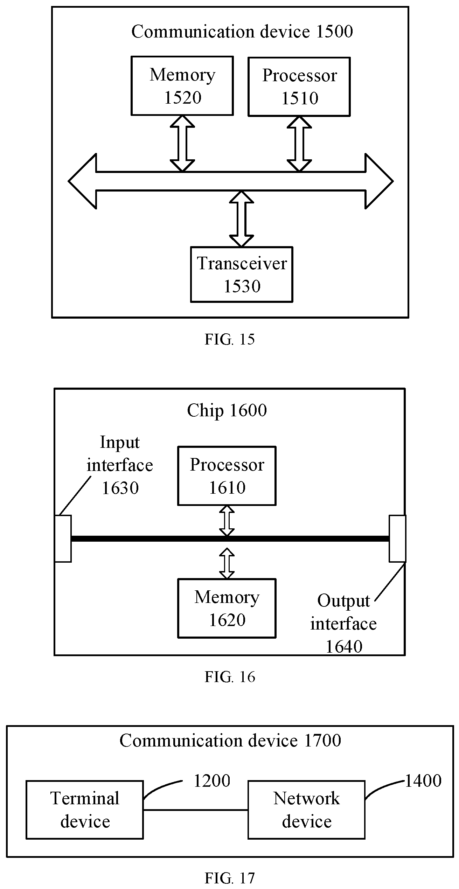

FIG. 15 illustrates a schematic structural diagram of a communication device 1500 according to some embodiments of the present disclosure. The communication device 1500 includes a processor 1510, wherein the processor 1510 is configured to load one or more computer programs from a memory and run the one or more computer programs to cause the communication device 1500 to implement the methods in the embodiments of the present disclosure.

In some embodiments, the communication device 1500 further includes a memory 1520. The processor 1510 is configured to load one or more computer programs from the memory 1520 and run the one or more computer programs to cause the communication device 1500 to implement the methods in the embodiments of the present disclosure.

The memory 1520 may be a device independent of the processor 1510 or integrated in the processor 1510.

In some embodiments, the communication device 1500 further includes a transceiver 1530. The processor 1510 controls the transceiver 1530 to communicate with other devices, for example, transmitting information or data to other devices or receiving information or data from other devices.

The transceiver 1530 may include a transmitter and a receiver. The transceiver 1530 further includes one or more antennas.

In some embodiments, the communication device 1500 is the network device in the embodiments of the present disclosure, and the communication device 1500 can implement the corresponding processes, implemented by the network device, in various methods of the embodiments of the present disclosure, which is not elaborated herein for the purpose of brevity.

In some embodiments, the communication device 1500 is the terminal device in the embodiments of the present disclosure, and the communication device 1500 can implement the corresponding processes, implemented by the terminal device, in various methods of the embodiments of the present disclosure, which is not elaborated herein for the purpose of brevity.

FIG. 16 illustrates a schematic block diagram of a chip 1600 according to some embodiments of the present disclosure. The chip 1600 includes a processor 1610, wherein the processor 1610 is configured to load one or more computer programs and run the one or more computer programs from a memory to implement the methods in the embodiments of the present disclosure.

In some embodiments, the chip 1600 further includes a memory 1620. The processor 1610 is configured to load one or more computer programs from the memory 1620 and run the one or more computer programs to implement the methods performed by the terminal device or the network device in the embodiments of the present disclosure.

The memory 1620 may be a device independent of the processor 1610 or integrated in the processor 1610.

In some embodiments, the chip 1600 further includes an input interface 1630. The processor 1610 controls the input interface 1630 to communicate with other devices or chips, for example, acquiring information or data from other devices or chips.

In some embodiments, the chip 1600 further includes an output interface 1640. The processor 1610 controls the output interface 1640 to communicate with other devices or chips, for example, outputting information or data to other devices or chips.

In some embodiments, the chip is applied in the network device in the embodiments of the present disclosure, and the chip can implement the corresponding processes, implemented by the network device, in various methods of the embodiments of the present disclosure, which is not elaborated herein for the purpose of brevity.

In some embodiments, the chip is applied in the terminal device in the embodiments of the present disclosure, and chip can implement the corresponding processes, implemented by the terminal device, in various methods of the embodiments of the present disclosure, which is not elaborated herein for the purpose of brevity.

The chips applied to the network device and the terminal device are the same chip or different chips.

It is understandable that the chip mentioned in the embodiments of the present disclosure is also referred to as a system-level chip, a system chip, a chip system, a system-on-chip, or the like.

The processor mentioned above is a general processor, a digital signal processor (DSP), a field-programmable gate array (FPGA), an application-specific integrated circuit (ASIC), other programmable logic devices, transistor logic devices, or discrete hardware assemblies, or the like. The general processor mentioned above is a microprocessor, any conventional processor, or the like.

The memory mentioned above is a volatile memory or a non-volatile memory, or includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random access memory (RAM).

It is understandable that the above memory is exemplary but not for limitation. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memory in the embodiments of the present disclosure is intend to include, but not limit to these and any other suitable type of memory.

FIG. 17 illustrates a schematic block diagram of a communication system 1700 according to some embodiments of the present disclosure. The communication system 1700 includes a terminal device 1200 and a network device 1400.

The terminal device 1200 transmits first reporting information to the network device 1400, wherein the first reporting information includes CSI feedback information, and the first reporting information is used for the network device 1400 to determine whether the CSI feedback information is used for monitoring a first CSI feedback model.

The network device 1400 receives first reporting information from the terminal device 1200, wherein the first reporting information includes CSI feedback information. The network device 1400 determines, based on the first reporting information, whether to use the CSI feedback information for monitoring the first CSI feedback model.

The terminal device 1200 is configured to implement the corresponding functions of the terminal device in the above method embodiments, and the network device 1400 is configured to implement the corresponding functions of the network device in the above method embodiments, which are not elaborated herein any further for brevity.

All or part of the above embodiments may be implemented by software, hardware, firmware, or any combination thereof. All or part of the above embodiments, when implemented by software, may be implemented in the form of a computer program product. The computer program product includes one or more computer instructions. The one or more instructions, when loaded and run on a computer, all or part of the processes or functions in the embodiments of the present disclosure are generated. The computer is a general computer, a special-purpose computer, a computer network, or other programmable devices. The one or more computer instructions are stored in a computer-readable medium or transmitted from one computer-readable medium to another computer-readable medium. For example, the one or more computer instructions are transmitted from one network station, computer, server or data center in a wired manner (such as via a coaxial-cable, an optical fiber, or a digital subscriber line (DSL)) or in wireless manner (such as via infrared, radio, or microwaves) to another network station, computer, server or data center. The computer-readable medium may be any available medium accessible by a computer or may be a data storage device including one or more servers, data centers or the like that are integrated with an available medium. The available medium may be a magnetic medium (e.g., a floppy disk, a hard disk, or a magnetic tape), an optical medium (e.g., a DVD), a semiconductor medium (e.g., a solid state disk (SSD)), or the like.

It is understandable that the serial numbers of the processes in various embodiments of the present disclosure do not represent the execution sequence among the processes. The execution sequence among the processes is determined based on the functions and internal logic thereof, and the implementation process of the embodiments of the present disclosure are not limited thereto.

A person skilled in the art may clearly understand that, for the specific working processes of the above-described system, device and unit, reference may be made to the corresponding processed in the above method embodiments, which are not repeated any further for the convenience and brevity of description.

Described above are specific embodiments of the present disclosure, and are not intended to limit the present disclosure. Within the technical scope disclosed in the present disclosure, any variations or replacements readily available to those skilled in the art should be encompassed within the scope of protection of the present disclosure. Accordingly, the scope of protection of the present disclosure should be subject to the scope of protection of the claims.

## Claims

1. A method for transmitting information, performed by a terminal device, the method comprising:
transmitting first reporting information to a network device, wherein the first reporting information comprises channel state information (CSI) feedback information, and the first reporting information is used for the network device to determine whether the CSI feedback information is used for monitoring a first CSI feedback model.

2. The method according to claim 1, wherein in a case where the CSI feedback information is not used for monitoring the first CSI feedback model, the CSI feedback information comprises first encoded information;
wherein the first encoded information is acquired by the terminal device by encoding first CSI using an encoder in the first CSI feedback model, and the first encoded information is used for the network device to acquire second CSI by decoding using a decoder in the first CSI feedback model.

3. The method according to claim 1 or 2, wherein in a case where the CSI feedback information is used for monitoring the first CSI feedback model, the CSI feedback information comprises first CSI or compressed data of the first CSI.

4. The method according to claim 3, wherein a number of bits in the compressed data of the first CSI is greater than a number of bits in first encoded information acquired by encoding the first CSI using an encoder in the first CSI feedback model.

5. The method according to claim 3 or 4, wherein the compressed data of the first CSI comprises second encoded information acquired by the terminal device by encoding the first CSI using an encoder in a second CSI feedback model.

6. The method according to claim 5, further comprising:
acquiring third CSI by decoding the second encoded information using a decoder in the second CSI feedback model;
acquiring fourth CSI by processing the third CSI using the first CSI feedback model; and
monitoring the first CSI feedback model based on the third CSI and the fourth CSI.

7. The method according to any one of claims 1 to 6, wherein the first reporting information comprises type indication information, wherein the type indication information is used to indicate whether the CSI feedback information is used for monitoring the first CSI feedback model.

8. The method according to any one of claims 1 to 7, wherein a related parameter of the first reporting information is used for the network device to determine whether the CSI feedback information is used for monitoring the first CSI feedback model.

9. The method according to claim 8, wherein the related parameter of the first reporting information comprises a transmission time of the first reporting information.

10. The method according to any one of claims 1 to 9, wherein prior to transmitting the first reporting information to the network device, the method further comprises:
receiving configuration information from the network device, wherein the configuration information is used to instruct the terminal device to transmit the CSI feedback information used for monitoring the first CSI feedback model.

11. The method according to claim 10, wherein the configuration information is used to indicate at least one of:
a transmission time of the CSI feedback information;
a number of bits in the CSI feedback information; or
an identifier (ID) of a second CSI feedback model for acquiring the CSI feedback information.

12. The method according to any one of claims 1 to 11, further comprising:
receiving deactivation information from the network device, wherein the deactivation information is used to instruct the terminal device to stop transmitting the CSI feedback information used for monitoring the first CSI feedback model.

13. A method for transmitting information, performed by a network device, the method comprising:
receiving first reporting information from a terminal device, wherein the first reporting information comprises channel state information (CSI) feedback information; and
determining, based on the first reporting information, whether to use the CSI feedback information for monitoring a first CSI feedback model.

14. The method according to claim 13, further comprising:
in a case where the CSI feedback information is not used for monitoring the first CSI feedback model, acquiring second CSI by decoding first encoded information in the CSI feedback information using a decoder in the first CSI feedback model; wherein the first encoded information is acquired by the terminal device by encoding first CSI using an encoder in the first CSI feedback model.

15. The method according to claim 13 or 14, further comprising:
in a case where the CSI feedback information is used for monitoring the first CSI feedback model, monitoring the first CSI feedback model based on first CSI in the CSI feedback information or compressed data of the first CSI in the CSI feedback information.

16. The method according to claim 15, wherein a number of bits in the compressed data of the first CSI is greater than a number of bits in first encoded information acquired by encoding the first CSI using an encoder in the first CSI feedback model.

17. The method according to claim 15 or 16, wherein the compressed data of the first CSI comprises second encoded information acquired by the terminal device by encoding the first CSI using an encoder in a second CSI feedback model.

18. The method according to claim 17, wherein monitoring the first CSI feedback model based on the first CSI in the CSI feedback information or the compressed data of the first CSI in the CSI feedback information comprises:
acquiring third CSI by decoding the second encoded information in the CSI feedback information using a decoder in the second CSI feedback model;
acquiring fourth CSI by processing the third CSI using the first CSI feedback model; and
monitoring the first CSI feedback model based on the third CSI and the fourth CSI.

19. The method according to any one of claims 13 to 18, wherein the first reporting information comprises type indication information, wherein the type indication information is used to indicate whether the CSI feedback information is used for monitoring the first CSI feedback model.

20. The method according to any one of claims 13 to19, wherein a related parameter of the first reporting information is used for the network device to determine whether the CSI feedback information is used for monitoring the first CSI feedback model.

21. The method according to claim 20, wherein the related parameter of the first reporting information comprises a transmission time of the first reporting information.

22. The method according to any one of claims 13 to 21, wherein prior to receiving the first reporting information from the terminal device, the method further comprises:
transmitting configuration information to the terminal device, wherein the configuration information is used to instruct the terminal device to transmit the CSI feedback information used for monitoring the first CSI feedback model.

23. The method according to claim 22, wherein the configuration information is used to indicate at least one of:
a transmission time of the CSI feedback information;
a number of bits in the CSI feedback information; or
an identifier (ID) of a second CSI feedback model for acquiring the CSI feedback information.

24. The method according to any one of claims 13 to 23, further comprising:
transmitting deactivation information to the terminal device, wherein the deactivation information is used to instruct the terminal device to stop transmitting the CSI feedback information used for monitoring the first CSI feedback model.

25. A terminal device, comprising:
a first communication module, configured to transmit first reporting information to a network device, wherein the first reporting information comprises channel state information (CSI) feedback information, and the first reporting information is used for the network device to determine whether the CSI feedback information is used for monitoring a first CSI feedback model.

26. The terminal device according to claim 25, wherein in a case where the CSI feedback information is not used for monitoring the first CSI feedback model, the CSI feedback information comprises first encoded information;
wherein the first encoded information is acquired by encoding first CSI using an encoder in the first CSI feedback model, and the first encoded information is used for the network device to acquire second CSI by decoding using a decoder in the first CSI feedback model.

27. The terminal device according to claim 25 or 26, wherein in a case where the CSI feedback information is used for monitoring the first CSI feedback model, the CSI feedback information comprises first CSI or compressed data of the first CSI.

28. The terminal device according to claim 27, wherein a number of bits in the compressed data of the first CSI is greater than a number of bits in first encoded information acquired by encoding the first CSI using an encoder in the first CSI feedback model.

29. The terminal device according to claim 27 or 28, wherein the compressed data of the first CSI comprises second encoded information acquired by encoding the first CSI using an encoder in a second CSI feedback model.

30. The terminal device according to claim 29, further comprising a first processing module, wherein the first processing module is configured to:
acquire third CSI by decoding the second encoded information using a decoder in the second CSI feedback model;
acquire fourth CSI by processing the third CSI using the first CSI feedback model; and
monitor the first CSI feedback model based on the third CSI and the fourth CSI.

31. The terminal device according to any one of claims 25 to 30, wherein the first reporting information comprises type indication information, wherein the type indication information is used to indicate whether the CSI feedback information is used for monitoring the first CSI feedback model.

32. The terminal device according to any one of claims 25 to 31, wherein a related parameter of the first reporting information is used for the network device to determine whether the CSI feedback information is used for monitoring the first CSI feedback model.

33. The terminal device according to claim 32, wherein the related parameter of the first reporting information comprises a transmission time of the first reporting information.

34. The terminal device according to any one of claims 25 to 33, wherein the first communication module is further configured to:
receive configuration information from the network device, wherein the configuration information is used to indicate to transmit the CSI feedback information used for monitoring the first CSI feedback model.

35. The terminal device according to claim 34, wherein the configuration information is used to indicate at least one of:
a transmission time of the CSI feedback information;
a number of bits in the CSI feedback information; or
an identifier (ID) of a second CSI feedback model for acquiring the CSI feedback information.

36. The terminal device according to any one of claims 25 to 35, wherein the first communication module is further configured to:
receive deactivation information from the network device, wherein the deactivation information is used to indicate to stop transmitting the CSI feedback information used for monitoring the first CSI feedback model.

37. A network device, comprising:
a second communication module, configured to receive first reporting information from a terminal device, wherein the first reporting information comprises channel state information (CSI) feedback information; and
a second processing module, configured to determine, based on the first reporting information, whether to use the CSI feedback information for monitoring a first CSI feedback model.

38. The network device according to claim 37, wherein the second processing module is further configured to:
in a case where the CSI feedback information is not used for monitoring the first CSI feedback model, acquire second CSI by decoding first encoded information in the CSI feedback information using a decoder in the first CSI feedback model; wherein the first encoded information is acquired by the terminal device by encoding first CSI using an encoder in the first CSI feedback model.

39. The network device according to claim 37 or 38, wherein the second processing module is further configured to:
in a case where the CSI feedback information is used for monitoring the first CSI feedback model, monitor the first CSI feedback model based on first CSI in the CSI feedback information or compressed data of the first CSI in the CSI feedback information.

40. The network device according to claim 39, wherein a number of bits in the compressed data of the first CSI is greater than a number of bits in first encoded information acquired by encoding the first CSI using an encoder in the first CSI feedback model.

41. The network device according to claim 39 or 40, wherein the compressed data of the first CSI comprises second encoded information acquired by the terminal device by encoding the first CSI b using an encoder in a second CSI feedback model.

42. The network device according to claim 41, wherein the second processing module is further configured to:
acquire third CSI by decoding the second encoded information in the CSI feedback information using a decoder in the second CSI feedback model;
acquire fourth CSI by processing the third CSI using the first CSI feedback model; and
monitor the first CSI feedback model based on the third CSI and the fourth CSI.

43. The network device according to any one of claims 37 to 42, wherein the first reporting information comprises type indication information, wherein the type indication information is used to indicate whether the CSI feedback information is used for monitoring the first CSI feedback model.

44. The network device according to any one of claims 37 to 43, wherein a related parameter of the first reporting information is used for determining whether the CSI feedback information is used for monitoring the first CSI feedback model.

45. The network device according to claim 44, wherein the related parameter of the first reporting information comprises a transmission time of the first reporting information.

46. The network device according to any one of claims 37 to 45, wherein the second communication module is further configured to:
transmit configuration information to the terminal device, wherein the configuration information is used to instruct the terminal device to transmit the CSI feedback information used for monitoring the first CSI feedback model.

47. The network device according to claim 46, wherein the configuration information is used to indicate at least one of:
a transmission time of the CSI feedback information;
a number of bits in the CSI feedback information; or
an identifier (ID) of a second CSI feedback model for acquiring the CSI feedback information.

48. The network device according to any one of claims 37 to 47, wherein the second communication module is further configured to:
transmit deactivation information to the terminal device, wherein the deactivation information is used to instruct the terminal device to stop transmitting the CSI feedback information used for monitoring the first CSI feedback model.

49. A terminal device, comprising: a transceiver, a processor, and a memory; wherein the memory is configured to store one or more computer programs, the transceiver is configured to communicate with another device, and the processor is configured to load and run the one or more computer programs stored in the memory to cause the terminal device to perform:
transmitting first reporting information to a network device, wherein the first reporting information comprises channel state information (CSI) feedback information, and the first reporting information is used for the network device to determine whether the CSI feedback information is used for monitoring a first CSI feedback model.

50. The terminal device according to claim 49, wherein in a case where the CSI feedback information is not used for monitoring the first CSI feedback model, the CSI feedback information comprises first encoded information;
wherein the first encoded information is acquired by the terminal device by encoding first CSI using an encoder in the first CSI feedback model, and the first encoded information is used for the network device to acquire second CSI by decoding using a decoder in the first CSI feedback model.

51. The terminal device according to claim 49 or 50, wherein in a case where the CSI feedback information is used for monitoring the first CSI feedback model, the CSI feedback information comprises first CSI or compressed data of the first CSI.

52. The terminal device according to claim 51, wherein a number of bits in the compressed data of the first CSI is greater than a number of bits in first encoded information acquired by encoding the first CSI using an encoder in the first CSI feedback model.

53. The terminal device according to claim 51 or 52, wherein the compressed data of the first CSI comprises second encoded information acquired by the terminal device by encoding the first CSI using an encoder in a second CSI feedback model.

54. The terminal device according to claim 53, wherein the processor is further configured to cause the terminal device to perform:
acquiring third CSI by decoding the second encoded information using a decoder in the second CSI feedback model;
acquiring fourth CSI by processing the third CSI using the first CSI feedback model; and
monitoring the first CSI feedback model based on the third CSI and the fourth CSI.

55. The terminal device according to any one of claims 49 to 54, wherein the first reporting information comprises type indication information, wherein the type indication information is used to indicate whether the CSI feedback information is used for monitoring the first CSI feedback model.

56. The terminal device according to any one of claims 49 to 55, wherein a related parameter of the first reporting information is used for the network device to determine whether the CSI feedback information is used for monitoring the first CSI feedback model.

57. The terminal device according to claim 56, wherein the related parameter of the first reporting information comprises a transmission time of the first reporting information.

58. The terminal device according to any one of claims 49 to 57, wherein the processor is further configured to cause the terminal device to perform:
receiving configuration information from the network device, wherein the configuration information is used to instruct the terminal device to transmit the CSI feedback information used for monitoring the first CSI feedback model.

59. The terminal device according to claim 58, wherein the configuration information is used to indicate at least one of:
a transmission time of the CSI feedback information;
a number of bits in the CSI feedback information; or
an identifier (ID) of a second CSI feedback model for acquiring the CSI feedback information.

60. The terminal device according to any one of claims 49 to 59, wherein the processor is further configured to cause the terminal device to perform:
receiving deactivation information from the network device, wherein the deactivation information is used to instruct the terminal device to stop transmitting the CSI feedback information used for monitoring the first CSI feedback model.

61. A network device, comprising: a transceiver, a processor, and a memory; wherein the memory is configured to store one or more computer programs, the transceiver is configured to communicate with another device, and the processor is configured to load and run the one or more computer programs stored in the memory to cause the network device to perform:
receiving first reporting information from a terminal device, wherein the first reporting information comprises channel state information (CSI) feedback information; and
determining, based on the first reporting information, whether to use the CSI feedback information for monitoring a first CSI feedback model.

62. The network device according to claim 61, wherein the processor is further configured to cause the network device to perform:
in a case where the CSI feedback information is not used for monitoring the first CSI feedback model, acquiring second CSI by decoding first encoded information in the CSI feedback information using a decoder in the first CSI feedback model; wherein the first encoded information is acquired by the terminal device by encoding first CSI using an encoder in the first CSI feedback model.

63. The network device according to claim 61 or 62, wherein the processor is further configured to cause the network device to perform:
in a case where the CSI feedback information is used for monitoring the first CSI feedback model, monitoring the first CSI feedback model based on first CSI in the CSI feedback information or compressed data of the first CSI in the CSI feedback information.

64. The network device according to claim 63, wherein a number of bits in the compressed data of the first CSI is greater than a number of bits in first encoded information acquired by encoding the first CSI using an encoder in the first CSI feedback model.

65. The network device according to claim 63 or 64, wherein the compressed data of the first CSI comprises second encoded information acquired by the terminal device by encoding the first CSI using an encoder in a second CSI feedback model.

66. The network device according to claim 65, wherein the processor is further configured to cause the network device to perform:
acquiring third CSI by decoding the second encoded information in the CSI feedback information using a decoder in the second CSI feedback model;
acquiring fourth CSI by processing the third CSI using the first CSI feedback model; and
monitoring the first CSI feedback model based on the third CSI and the fourth CSI.

67. The network device according to any one of claims 61 to 66, wherein the first reporting information comprises type indication information, wherein the type indication information is used to indicate whether the CSI feedback information is used for monitoring the first CSI feedback model.

68. The network device according to any one of claims 61 to 67, wherein a related parameter of the first reporting information is used for the network device to determine whether the CSI feedback information is used for monitoring the first CSI feedback model.

69. The network device according to claim 68, wherein the related parameter of the first reporting information comprises a transmission time of the first reporting information.

70. The network device according to any one of claims 61 to 69, wherein the processor is further configured to cause the network device to perform:
transmitting configuration information to the terminal device, wherein the configuration information is used to instruct the terminal device to transmit the CSI feedback information used for monitoring the first CSI feedback model.

71. The network device according to claim 70, wherein the configuration information is used to indicate at least one of:
a transmission time of the CSI feedback information;
a number of bits in the CSI feedback information; or
an identifier (ID) of a second CSI feedback model for acquiring the CSI feedback information.

72. The network device according to any one of claims 61 to 71, wherein the processor is further configured to cause the network device to perform:
transmitting deactivation information to the terminal device, wherein the deactivation information is used to instruct the terminal device to stop transmitting the CSI feedback information used for monitoring the first CSI feedback model.

73. A chip, comprising: a processor, wherein the processor is configured to load one or more computer programs from a memory and run the one or more computer programs to cause a device installed with the chip to perform the method as defined in any one of claims 1 to 12.

74. A chip, comprising: a processor, wherein the processor is configured to load one or more computer programs from a memory and run the one or more computer programs to cause a device installed with the chip to perform the method as defined in any one of claims 13 to 24.

75. A computer-readable storage medium, storing one or more computer programs, wherein the one or more computer programs, when run by a device, cause the device to perform the method as defined in any one of claims 1 to 12.

76. A computer-readable storage medium, storing one or more computer programs, wherein the one or more computer programs, when run by a device, cause the device to perform the method as defined in any one of claims 13 to 24.

77. A computer program product, comprising: one or more computer instructions, wherein the one or more computer instructions cause a computer to perform the method as defined in any one of claims 1 to 12.

78. A computer program product, comprising: one or more computer instructions, wherein the one or more computer instructions cause a computer to perform the method as defined in any one of claims 13 to 24.

79. A computer program, wherein the computer program causes a computer to perform the method as defined in any one of claims 1 to 12.

80. A computer program, wherein the computer program causes a computer to perform the method as defined in any one of claims 13 to 24.

81. A communication system, comprising:
a terminal device, configured to perform the method as defined in any one of claims 1 to 12; and
a network device, configured to perform the method as defined in any one of claims 13 to 24.
